# EUROPÄISCHE PATENTSCHRIFT

(11) **EP 0 682 183 B1**
(45) Veröffentlichungstag und Bekanntmachung des Hinweises auf die Patenterteilung: **28.07.1999**
(21) Anmeldenummer: 95104941.0
(22) Anmeldetag: 03.04.1995
(51) Int. Cl.: F16B 2/06, F16L 25/04, F16B 43/00

(54) **Verspanneinrichtung mit einem Befestigungsglied zum Verbinden eines ersten Teiles mit einem zweiten Teil**
Clamping device with a fastening member for joining a first part with a second part
Dispositif de serrage avec un membre de fixation pour joindre une première pièce avec une deuxième pièce

(30) Priorität: 12.04.1994 US 226532
(43) Veröffentlichungstag der Anmeldung: 15.11.1995
(73) Patentinhaber: Deere & Company, Moline, Illinois 61265-8098 (US)
(72) Erfinder: Ott, David Frederick, Sherrard, Illinois 61281 (US); Papish, Daniel Joseph, Coal Valley, Illinois 61240 (US)
(74) Vertreter: Feldmann, Bernhard

(56) Entgegenhaltungen:
- GB-A- 209 808
- US-A- 2 980 381
- US-A- 4 397 437

## Beschreibung

Die Erfindung bezieht sich auf eine Kombination eines ersten Teils und eines zweiten Teils mit einer ein Befestigungsglied aufweisenden Verspanneinrichtung, über die der erste Teil mit dem zweiten Teil verbindbar ist, wobei der zweite Teil zwei Durchgangsöffnungen und das Befestigungsglied zwei einenends miteinander verbundene Schenkel aufweist, die zueinander Abstand aufweisen, an sich gegenüberliegenden Seiten des ersten Teiles verlaufen, im verspannten Zustand, in dem der zweite Teil gegen den ersten Teil anliegt, sich durch die Durchgangslöcher erstrecken, an ihren freien Enden mit Gewindeabschnitten versehen sind, welche jeweils eine Mutter aufnehmen, die den ersten Teil gegenüber dem zweiten Teil festlegen.

Derartige Kombinationen (US-A-4 430 952) werden vielfach bei landwirtschaftlichen Geräten eingesetzt. Der erste Teil ist als ein mit einem ziehenden Fahrzeug verbindbarer und quer zur Arbeitsrichtung verlaufender Werkzeug- oder Geräteträger ausgebildet. An diesen werden Arbeitseinheiten angeschlossen, über die Saatgut einzeln in einer Furche abgelegt werden kann. Jede Arbeitseinheit ist einer Saatgutreihe zugeordnet und kann einen Saatgutbehälter aufweisen, aus dem Saatgut entnommen und in einer Saatrille abgelegt wird. Die Arbeitseinheit zieht zuvor die Saatrille, drückt das Saatgut in ihr fest und bedeckt schließlich das Saatgut mit Erdreich. Jede Arbeitseinheit ist gesondert über den als Befestigungsplatte ausgebildeten zweiten Teil an den Werkzeugträger über U-förmige Bügelschrauben anschließbar. Jede Bügelschraube hat einen Steg, von dem sich aus zwei Schenkel mit Gewindeabschnitten an ihren freien Enden erstrecken. Damit können die Bügelschrauben den im Querschnitt rechteckigen Werkzeugträger übergreifen, und auf die freien Enden der Schenkel wird die Befestigungsplatte aufgesteckt, die hierzu mit entsprechenden Durchgangslöchern versehen ist. Das Verspannen erfolgt über auf die Gewindeabschnitte aufschraubbare Muttern. Der Steg der Bügelschraube und die Befestigungsplatte werden dadurch fest gegen die entsprechenden Seiten des Werkzeugträgers gepreßt. Da, um ein leichtes Aufsetzen der Bügelschraube auf den Werkzeugträger zu gewährleisten, die Schenkel einen größeren Abstand als die Höhe des Werkzeugträgers aufweisen, wirken die Verspann- oder Klemmkräfte im wesentlichen nur zwischen dem Steg der Bügelschraube und der Befestigungsplatte. Andererseits müssen genaue Toleranzen eingehalten werden, damit die freien Enden der Bügelschraube in die Durchgangslöcher in der Befestigungsplatte eintreten können. Haben die Gewindeabschnitte keinen ausreichenden gegenseitigen Abstand und sind nicht genau zu den Durchgangslöchern ausgerichtet, sind Beschädigungen an den Gewinden die Folge. Gleichfalls kann beim Aufschieben der Lack am Werkzeugträger beschädigt werden.

Andererseits ist es bei Befestigungsplatten mit Schenkeln, die den Werkzeugträger umgreifen, auch nicht mehr neu (EP-A1-0 117 745), die Schenkel mit dem Werkzeugträger zu verspannen. Hierzu dient eine Schraube, die die beiden Schenkel an ihren freien Enden miteinander verspannt.

Damit auch von den Schenkeln des Befestigungsgliedes eine Verspannung oder Verklemmung ausgeht, sieht die Erfindung vor, daß im Bereich einer der beiden Muttern ein Steuerteil vorgesehen ist, über den bei angezogenen Muttern die beiden Schenkel des Befestigungsgliedes zur Anlage gegen den ersten Teil gezwungen werden. Auf diese Weise kann das Befestigungsglied dennoch leicht auf den den ersten Teil aufgesetzt werden und die Einhaltung genauer Toleranzen ist weniger kritisch.

Damit der Steuerteil die beiden Schenkel leicht gegen die entsprechenden Seiten des Werkzeugträgers ziehen kann, wird ferner vorgeschlagen, daß der Steuerteil aus einer über die zugehörige Mutter verstellbare Steuerfläche und aus einem Außenrand der zugehörigen Durchgangsbohrung gebildet ist, die Steuerfläche konisch und der Außenrand kreisförmig ausgebildet sind. Die Steuerfläche kann als ein separater Teil ausgebildet sein. Um aber zusätzliche Losteile zu vermeiden, wird nach der Erfindung bevorzugt, daß die Steuerfläche in die zugehörige Mutter integriert ist.

Im einzelnen kann nach der Erfindung ferner das freie Ende des ersten Schenkels in der zugehörigen Durchgangsbohrung zentrisch und das freie Ende des anderen Schenkels im unverspannten Zustand in der zugehörigen Durchgangsbohrung exzentrisch aufgenommen werden, wobei der Durchmesser einer Durchgangsbohrung größer ist als der Durchmesser der anderen Durchgangsbohrung.

Die vorstehenden Vorteile lassen sich besonders leicht und einfach dann realisieren, wenn die Verspanneinrichtung eine U-förmige Befestigungsschraube zum Verbinden einer Befestigungsplatte mit einem im Querschnitt rechteckigen Werkzeugträger aufweist.

In der Zeichnung ist ein nachfolgend näher erläutertes Ausführungsbeispiel der Erfindung dargestellt. Es zeigt:
- Fig. 1: eine Verspannvorrichtung in perspektivischer Darstellung und
- Fig. 2-4: zeigen den Verspannungsvorgang in seinen einzelnen Phasen.

Insbesondere bei den in der Landwirtschaft einsetzbaren Geräten für die Düngung, Bestellung und Pflege werden vielfach mit einem ziehenden Fahrzeug verbindbare und quer zur Arbeitsrichtung verlaufende Träger eingesetzt, an denen die einzelnen Werkzeuge zu befestigen sind. Die Werkzeuge sind dabei den einzelnen Reihen zugeordnet und können beispielsweise die Saat ausbringen, düngen und zudecken. Dies ist aber im Rahmen der vorliegenden Erfindung unerheblich, da diese sich damit befaßt, wie die einzelnen Werkzeuge oder die verschiedensten Gruppen an den Querträger anschließbar sind. Es muß sich auch nicht um einen Querträger handeln, da das nachfolgend im einzelnen noch zu beschreibende Anschlußsystem auf Werkzeug- oder Geräteträger vielfältiger Art anwendbar ist und auf diese auch nicht begrenzt sein soll. Bei dem bevorzugten Ausführungsbeispiel ist der Werkzeugträger 10 als Balken mit rechteckigem Querschnitt ausgebildet, wie er bei landwirtschaftlichen Geräten Verwendung findet. Dementsprechend ist der Werkzeugträger 10 mit einer ersten und einer zweiten planen Oberfläche 12 und 14, die seiner Ober- und Unterseite entsprechen, versehen. Gleichfalls sind eine dritte und vierte plane Oberfläche 16 und 18 vorgesehen, die der Vorder- und Rückseite des Trägers entsprechen und bei einer rechtwinkeligen Ausbildung des Trägers zu der ersten und zweiten Oberfläche rechtwinklig verlaufen. Anstelle der rechtwinkeligen Trägerausbildung können auch andere Querschnittsformen auftreten, beispielsweise ovale oder runde.

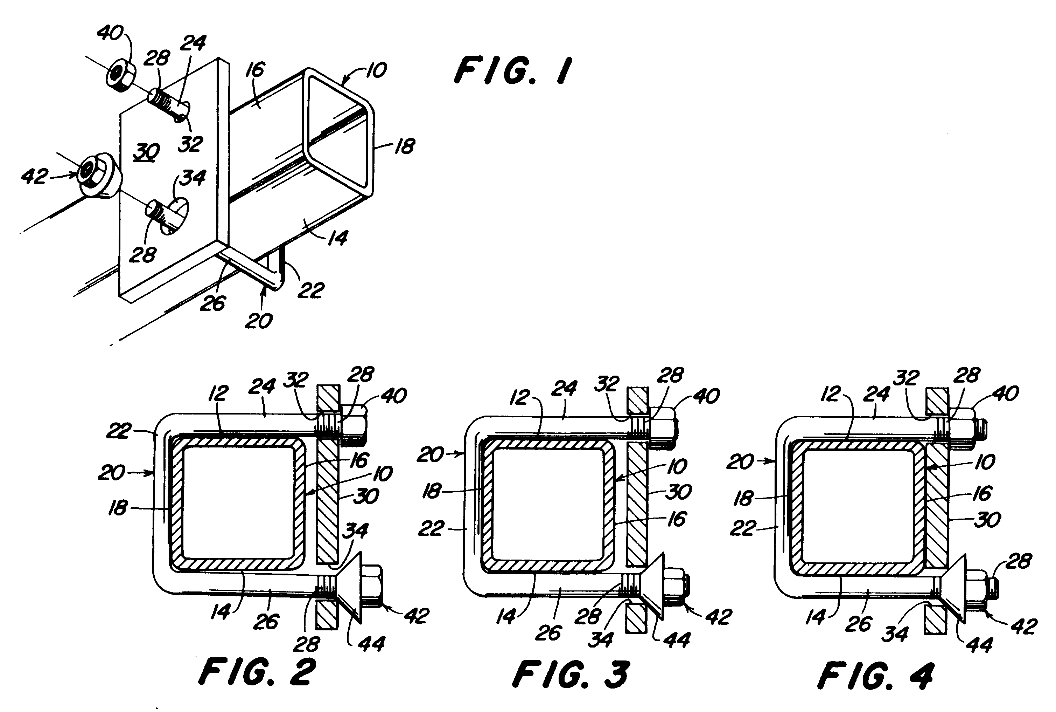

Der Träger 10 wird teilweise von einer Befestigungsschraube 20 umgriffen, die beim Ausführungsbeispiel als U-Schraube ausgebildet ist. Ihr Steg ist mit 22 und ihre Schenkel sind mit 24 und 26 bezeichnet. Die Schenkel 24 und 26 erstrecken sich von dem Steg aus nach außen und sind an ihren freien Enden mit Gewindeabschnitten 28 versehen. Desweiteren ist aus Fig. 2 zu entnehmen, daß die Schenkel leicht auseinanderlaufen, um ihr Aufsetzen auf den Träger zu erleichtern. Dabei entspricht die Stegbreite der Höhe der dritten und vierten Oberfläche 16 und 18 des Werkzeugträgers 10. Weist der Träger keinen rechtwinkligen Querschnitt auf, so wird anstelle der U-Schraube eine dem anderen Querschnitt angepaßte Bügelschraube verwendet.

Die jeweilige Befestigungsschraube dient zum Anschließen einer Befestigungsplatte 30 an den Träger, an der die Werkzeuge oder Gruppen angreifen. Die Befestigungsplatte 30 ist mit einer ersten und einer zweiten ringförmigen Öffnung 32 und 34 versehen. Die erste Öffnung 32 ist herkömmlicher Art, d. h. sie hat einen Durchmesser, der das zentrische Durchtreten des ersten Schenkels 24 mit seinem Gewindeabschnitt 28 erlaubt. Die zweite Öffnung 34 hat einen größeren Durchmesser als die erste Öffnung 32 und nimmt den zweiten Schenkel 26 zunächst exzentrisch auf. Dies ist aus Fig. 2 zu erkennen. Die äußere Begrenzung beider Öffnungen 32 und 34 wird durch entsprechende Ringkanten in der Befestigungsplatte bestimmt.

Die Befestigungsplatte 30 wird über Muttern mit dem Werkzeugträger 10 verspannt. Hierzu wird eine erste Mutter 40 auf den über die Befestigungsplatte überstehenden Gewindeabschnitt 28 des ersten Schenkels 24 aufgeschraubt. Entsprechend wird eine zweite Mutter 42 auf den Gewindeabschnitt 28 des zweiten Schenkels 26 aufgeschraubt. Die zweite Mutter 42 ist dabei allerdings anders als die erste Mutter 40 mit einer Nocken- oder Steuerfläche in Form eines konischen Abschnittes 44 versehen. Der konische Abschnitt kann ein in die zweite Mutter 42 integrierter Teil sein, was aber nicht zwingend ist. Ein entsprechend konisch ausgebildetes Einzelstück ist ebenfalls denkbar. In jedem Fall sollte aber der konische Abschnitt derart gestaltet sein, daß bei einem Anziehen der zweiten Mutter 42 der zweite Schenkel 26 in der zweiten Öffnung 34 zentriert wird oder sich in Richtung des ersten Schenkels 24 bewegt. Dies ist aus Fig. 3 erkennbar, in der die beiden Muttern noch nicht fest angezogen sind. Fig. 4 zeigt die Befestigungsplatte 30, wenn sie mit dem Werkzeugträger 10 fest verspannt ist.

Für den Zusammenbau wird zunächst die Befestigungsschraube auf den Träger aufgeschoben. Danach wird die Befestigungsplatte 30 auf die über den Träger überstehenden Schenkelabschnitte der Befestigungsschraube aufgesteckt, wobei die Gewindeabschnitte 28 an der dem Träger abgelegenen Seite der Befestigungsplatte austreten und ein Aufschrauben der beiden Muttern erlauben. Bei einem Anziehen der zweiten Mutter tritt die Nockenfläche in die zweite Öffnung ein bzw. legt sich gegen die Außenkante der zweiten Öffnung. Dabei wird der zweite Schenkel gegen die Unterseite des Trägers und der erste Schenkel gegen die Oberseite des Trägers gepreßt. Sind beide Muttern fest angezogen, so wird nicht nur die Befestigungsplatte fest gegen die Vorderseite des Trägers gepreßt, sondern die beiden Schenkel der Befestigungsschraube werden zusätzlich noch fest gegen die Ober- und Unterseite des Trägers gepreßt. Als Folge stellt sich eine allseits feste Verspannung ein, die mit einfachsten Mitteln zu erreichen ist. Fertigungstoleranzen werden ausgeglichen.

## Patentansprüche

1. Kombination eines ersten Teils und eines zweiten Teils mit einer ein Befestigungsglied (20) aufweisenden Verspanneinrichtung, über die der erste Teil mit dem zweiten Teil verbindbar ist, wobei der zweite Teil zwei Durchgangsöffnungen (32, 34) und das Befestigungsglied (20) zwei einenends miteinander verbundene Schenkel (24, 26) aufweist, die zueinander Abstand aufweisen, an sich gegenüberliegenden Seiten des ersten Teiles verlaufen, im verspannten Zustand, in dem der zweite Teil gegen den ersten Teil anliegt, sich durch die Durchgangslöcher (32, 34) erstrecken, an ihren freien Enden mit Gewindeabschnitten (28) versehen sind, welche jeweils eine Mutter (40, 42) aufnehmen, die den ersten Teil gegenüber dem zweiten Teil festlegen, dadurch gekennzeichnet, daß im Bereich einer der beiden Muttern (40, 42) eine über die zugehörige Mutter (42) verstellbare Steuerfläche vorgesehen ist, die mit einem Außenrand der zugehörigen Durchgangsöffnung (32, 34) zusammenwirkt, um bei angezogenen Muttern (40, 42) die beiden Schenkel (24, 26) des Befestigungsgliedes (20) aufeinander zu zur Anlage gegen den ersten Teil zu zwingen.

2. Kombination nach Anspruch 1, wobei der erste Teil als ein Werkzeugträger (10) und der zweite Teil als eine Befestigungsplatte (30) ausgebildet ist, dadurch gekennzeichnet, daß der Steuerteil aus einer über die zugehörige Mutter (40 bzw. 42) verstellbare Steuerfläche und aus einem Außenrand der zugehörigen Durchgangsbohrung (32, 34) gebildet ist.

3. Kombination nach Anspruch 2, dadurch gekennzeichnet, daß die Steuerfläche konisch und der Außenrand kreisförmig ausgebildet sind.

4. Kombination nach Anspruch 3, dadurch gekennzeichnet, daß die Steuerfläche in die zugehörige Mutter (40 bzw. 42) integriert ist.

5. Kombination nach einem oder mehreren der vorherigen Ansprüche, dadurch gekennzeichnet, daß das freie Ende des ersten Schenkels (24) in der zugehörigen Durchgangsbohrung (32) zentrisch und das freie Ende des zweiten Schenkels (26) im unverspannten Zustand in der zugehörigen Durchgangsbohrung (34) exzentrisch aufgenommen ist.

6. Kombination nach Anspruch 5, dadurch gekennzeichnet, daß der Durchmesser einer Durchgangsbohrung (34) größer ist als der Durchmesser der anderen Durchgangsbohrung (32).

7. Kombination mit einer U-förmigen Befestigungsschraube (20) zum Verbinden einer Befestigungsplatte (30) mit einem im Querschnitt rechteckigen Werkzeugträger (10), gekennzeichnet durch eines oder mehrere Merkmale der Ansprüche 1 bis 6.

## Claims

1. A combination of a first part and a second part with a fastening device comprising a fixing member (20), through which the first part can be joined to the second part, wherein the second part comprises two through openings (32, 34) and the fixing member (20) comprises two arms (24, 26) connected to one another at one end, which are spaced from one another and extend on opposite sides of the first part, extend in the tightened state, in which the second part lies against the first part, through the through holes (32, 34), are provided at their free ends with threaded sections (28), which each receive a nut (40, 42) which nuts fix the first part relative to the second part, characterized in that an adjustable control surface is provided in the region of one of the two nuts (40, 42) which cooperates with an outer edge of the associated through opening (32, 34), in order to urge the two arms (24, 26) of the fixing member (20) towards one another into abutment with the first part when the nuts (40, 42) are tightened up.

2. A combination according to claim 1, wherein the first part is in the form of a tool carrier (10) and the second part is in the form of an attachment plate (30), characterized in that the control part is formed from a control surface adjustable by the corresponding nut (40 or 42) and from an outer edge of the corresponding through bore (32, 34).

3. A combination according to claim 2, characterized in that the control surface is conical and the outer edge is circular.

4. A combination according to claim 3, characterized in that the control surface is integrated with the corresponding nut (40 or 42).

5. A combination according to one or more of the preceding claims, characterized in that the free end of the first arm (24) is received centrally in the corresponding through bore (32) and the free end of the second arm (26) is received eccentrically in the corresponding through bore (34) in the un-tightened state.

6. A combination according to claim 5, characterized in that the diameter of one through bore (34) is greater than the diameter of the other through bore (32).

7. A combination with an U-shaped fixing bolt (20) for connecting an attachment plate (30) to a tool carrier (10) of rectangular cross-section, characterized by one or more features of claims 1 to 6.

## Revendications

1. Ensemble combiné d'une première pièce et d'une seconde pièce comprenant un dispositif de serrage, qui possède un organe de fixation (20) et au moyen duquel la première pièce peut être reliée à la seconde pièce, et dans lequel la seconde pièce comporte deux ouvertures de passage (32, 34) et l'organe de fixation (20) comporte deux branches (24, 26) reliées entre elles à une de leurs extrémités et qui sont distantes l'une de l'autre, s'étendent sur des côtés opposés de la première pièce et, qui à l'état serré dans lequel la seconde pièce s'applique contre la première pièce, s'étendent à travers les trous de passage (32, 34)etcomportent, au niveau de leurs extrémités libres, des parties filetées (28), qui reçoivent des écrous respectifs (40, 42), qui fixent la première pièce à la seconde pièce, caractérisé en ce qu'au niveau de l'un des deux écrous (40, 42), il est prévu une surface de commande réglable au moyen de l'écrou associé (42) et qui coopère avec un bord extérieur de l'ouverture de passage associée (32, 34) pour repousser à force les deux branches (24, 26) de l'organe de fixation (20) l'une vers l'autre de manière qu'elles s'appliquent contre la première pièce, lorsque les écrous (40, 42) sont serrés.

2. Ensemble combiné selon la revendication 1, dans lequel la première pièce est agencée sous la forme d'un porte-outil (10) et la seconde pièce est agencée sous la forme d'une plaque de fixation (30), caractérisé en ce que la partie de commande est formée par une surface de commande, qui est réglable par l'intermédiaire de l'écrou associé (40 ou 42), et par un bord extérieur du perçage traversant associé (32, 34).

3. Ensemble combiné selon la revendication 2, caractérisé en ce que la surface de commande est agencée avec une forme conique et le bord extérieur est agencé avec une forme circulaire.

4. Ensemble combiné selon la revendication 3, caractérisé en ce que la surface de commande est intégrée dans l'écrou associé (40 ou 42).

5. Ensemble combiné selon une ou plusieurs des revendications précédentes, caractérisé en ce que l'extrémité libre de la première branche (24) est logée d'une manière centrée dans le perçage traversant associé (32) et qu'à l'état non serré, l'extrémité libre de la seconde branche (26) est logée d'une manière excentrée dans le perçage traversant associé (34).

6. Ensemble combiné selon la revendication 5, caractérisé en ce que le diamètre d'un perçage traversant (34) est supérieur au diamètre de l'autre perçage traversant (32).

7. Ensemble combiné comportant une vis de fixation en forme de U (20) servant à relier une plaque de fixation (30) à un porte-outil (10) qui est rectangulaire en coupe transversale, caractérisé par une ou plusieurs caractéristiques des revendications 1 à 6.
